# EUROPEAN PATENT APPLICATION

(11) **EP 0 883 232 A1**
(43) Date of publication of application: **09.12.1998**
(21) Application number: 98304439.7
(22) Date of filing: 04.06.1998
(51) Int. Cl.: H02P 1/28

(54) **Method of and apparatus for starting ac electric motor**

(30) Priority: 05.06.1997 JP 147912/97
(71) Applicant: Sato, Hirohito, Mitaka-shi, Tokyo-to (JP)
(72) Inventor: Sato, Hirohito, Mitaka-shi, Tokyo-to (JP)
(74) Representative: Driver, Virginia Rozanne

(57) **Abstract**

An AC electric motor (2) is started by applying a full voltage from an AC power supply (R, S, T) to the AC electric motor in a stop state on the unit of a positive or negative half-wave through a repetition of an ON time of a multiple of integer thereof and an OFF time subsequent thereto, and a ratio of the ON time to a sum of the ON time and the OFF time is gradually increased as the time elapses from by a factor of a certain number up to "1" during the starting process.

## Description

The present invention relates to a method of and an apparatus for starting an AC electric motor.

When a squirrel-cage three-phase induction motor in a stop state with no counter-electromotive force is started at a full voltage, a large starting current flows, and, if a power supply capacity is small, a power supply voltage is decreased. This might exert an adverse influence upon the electric motor itself or a power supply system and, besides, might result in its being unable to start when a large mechanical load is applied in the stop state as in the case of a compressor which stops particularly in a highpressure state. There have been proposed and carried out a variety of methods of starting the large-capacity squirrel-cage three-phase induction motor. This type of known starting methods are, for example, as follows:
1. A star-delta starting method of starting the motor by rearranging a motor winding of originally a delta connection into a star connection, and changing the connection back to the delta connection after a starting current has been reduced.
2. A reactor starting method of gradually increasing a conduction angle from a small conduction angle to a full conduction angle under conduction angle control by use of the thyristor etc.

There exist, however, the following inconveniences inherent in the respective starting methods given above. To be specific, it is required of the first method that two ends of each phase winding of the electric motor be led to the outside, and besides that a switching device be provided for switching over the connection and the led-out winding ends be connected to each other. Therefore, not only the costs increase, but also a large installation space is needed. Further, this method is eventually limited to the electric motor used in the delta connection. The second method requires the reactor and the switch for short-circuit and, separately from the connecting method, has the same inherent problems as those of the first method. According to the third method, the ignition of the semiconductor device such as the thyristor is controlled at a predetermined phase angle at each cycle of the AC power supply voltage, and hence a considerably high-class ignition control apparatus is required, resulting in increased costs.

What is known other than the above-mentioned methods is, e.g., a resistance starting method involving the use of a resistance instead of the reactor and a closed circuit transition autotransformer starting method using an autotransformer with a tap. According to these starting methods, however, it follows that a reduced voltage is applied as viewed from the electric motor, and there is a deficiency of a starting torque depending on the load, which might lead to inability of starting.

On the occasion of selecting this type of starting methods, the following problems must be sufficiently considered:
a ) A restraint of adverse influence upon the outside appliance due to the drop of voltage when started;
b ) A restraint of adverse influence upon the electric motor and the load device connected thereto due to a shock when applying the voltage;
c ) Assurance of a motor torque with respect to the load torque;
d ) Time durable quantities of the electric motor and of the starting apparatus; and
e ) A restraint of costs for the equipments.

Accordingly, it is a primary aim of the present invention to provide a method of and an apparatus for starting an AC electric motor capable of being soft-started at a low cost without requiring a large installation space.

To accomplish the above aim, according to one aspect of the present invention, a method of starting an AC electric motor comprises a step of starting an AC electric motor by applying a full voltage to said AC electric motor in a stop state on the unit of a positive or negative half-wave through a repetition of an ON time of a multiple of integer thereof and an OFF time subsequent thereto; and a step of gradually increasing a ratio of the ON time to a sum of the ON time and the OFF time as the time elapses substantially from by a fraction of a certain number up to "1" during the starting process.

The sum of the ON time and the OFF time subsequent thereto may be set constant, and the ratio of the ON time to the sum of the ON time and the OFF time may also be so controlled as to increase substantially proportionally to the time.

The ratio of the ON time to the sum of the ON time and the OFF time per period may be changed exponetial-function-wise in accordance with the passage of time.

The OFF time per period may be set substantially constant, and the ON time may also be so controlled as to gradually increase with the passage of time.

The ON time per period may be set substantially constant, and the OFF time per period may also be so controlled as to gradually decrease in accordance with the passage of time.

According to another aspect of the present invention, an apparatus for starting an AC electric motor comprises a thyristor connected in series between an AC power supply and said AC electric motor, a starting time setting unit for setting a starting time of the AC electric motor, a starting pattern setting unit for setting a pattern for a time of an effective applying voltage applied to the AC electric motor when started, and a thyristor control unit for starting the AC electric motor by applying a full voltage from the AC power supply to the AC electric motor in a stop state on the unit of a positive or negative half-wave through a repetition of an ON time of a multiple of integer thereof and an OFF time subsequent thereto in accordance with contents of settings by the starting time setting unit and the starting pattern setting unit, and controlling the thyristor so that a ratio of the ON time to a sum of the ON time and the OFF time as the time elapses substantially from by a fraction of a certain number up to "1" during the starting process.

For a better understanding of the present invention, and to show how the same may be carried into effect, reference will now be made by way of example to the accompanying drawings in which:
FIG. 1 shows a main circuit connection diagram of an apparatus for starting an AC electric motor according to the present invention, and a block diagram of a control circuit;
FIG. 2 is an explanetory graphic chart showing a starting pattern in FIG. 1;
FIG. 3 is a time chart showing a first example of a time transition of a duty when started according to the present invention;
FIG. 4 is a time chart showing a second example of the time transition of the duty when started according to the present invention; and
FIG. 5 is a time chart showing a third example of the time transition of the duty when started according to the present invention.

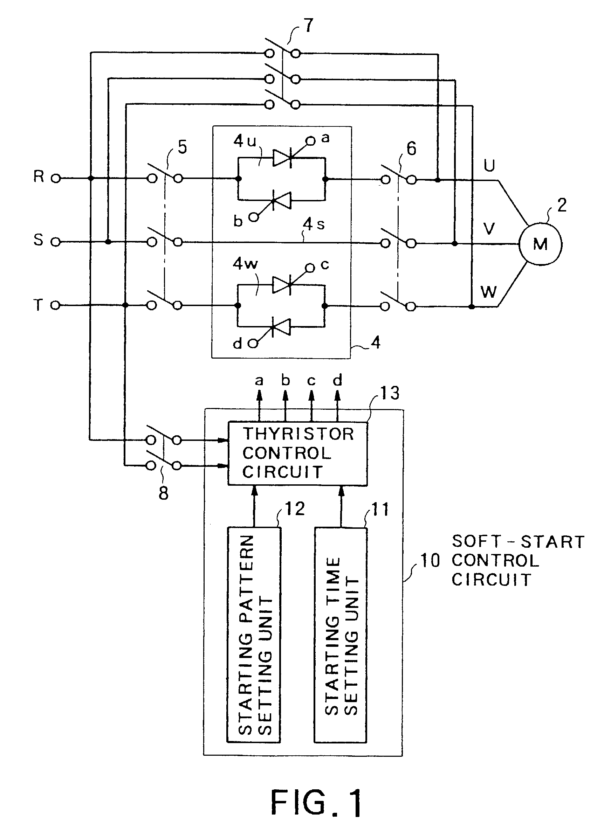

FIG. 1 shows one embodiment of the present invention. An AC electric motor 2 to be started is connected to AC power supply terminals R, S, T via a thyristor unit 4 basically constructed as a module. In this embodiment, electromagnetic contactors 5, 6 are connected protectively respectively to a power supply side and a load side of the thyristor unit 4, and further there is provided an electromagnetic contactor 7 for bridging between the thyristor unit 4 and the electromagnetic contactors 5, 6. The thyristor unit 4 is, in this embodiment, connected in series to only a U-phase and a W-phase, and is constructed of a U-phase thyristor unit 4u and a W-phase thyristor unit 4w. A V-phase is composed of a short-circuit conductor 4s. A thyristor unit 4v (unillustrated) may also be provided in place of this short-circuit conductor 4s. The thyristors are, however, provided only to the two phases (U and W phases), whereby such a predetermined purpose as switching ON/OFF the current can be accomplished. Therefore, the thyristors are not necessarily provided to all the three phases in terms of costs thereof. Each of the thyristors 4u, 4w is constructed of a pair of thyristors that are in an antiparallel connection, and gate terminals a, b are led out of each thyristor of the U-phase thyristor unit 4u, while gate terminals c, d are led out of each thyristor of the W-phase thyristor unit 4w.

A soft-start control circuit 10 is provided in order to soft-start the AC electric motor 2 trough the thyristor unit 4. The soft-start control circuit 10 is constructed of a starting time setting unit 11, a starting pattern setting unit 12 and a thyristor control circuit 13. There might be two cases where the starting time setting unit 11 sets a starting time, one case being that a starting time is predicted and set based on a power supply system configuration, various characteristics of the AC electric motor 2 and a characteristic of a mechanical load connected to the AC electric motor 2, and the other case being that the starting time is empirically set based on test data. The starting pattern setting unit 12 sets which effective voltage pattern to start the electric motor from an onset of the starting process to a completion thereof during the starting time set by the starting time setting unit 11. The thyristor control circuit 13 controls an ON-time and an OFF-time of each thyristor of the thyristor unit 4 in order to attain the desired starting in accordance with contents of the settings by the starting pattern setting unit 12 as well as by the starting time setting unit 11. Note that the soft start control circuit 10 obtains control electric power through the electromagnetic contactor 8 from the power supply terminals R, T. The electromagnetic contactor 8 may or may not interlock with the ON/OFF operations of the electromagnetic contactor 5.

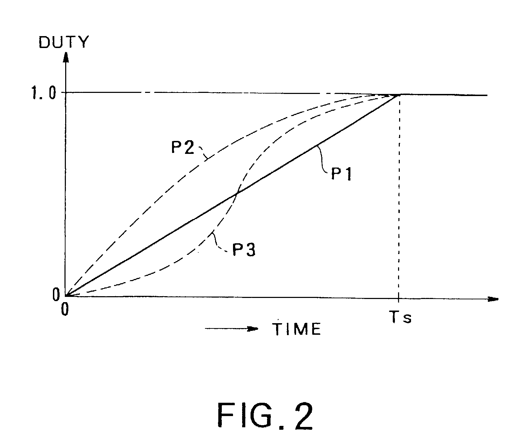

A function of the soft start control circuit 10 will be explained with reference to FIGS. 2 to 5. According to the present invention, an ignition phase angle of the thyristor is not controlled in a positive or negative half-wave of the power supply voltage, and the ON-time and the OFF-time which will be mentioned later on are, on the unit of the positive or negative half-wave of the voltage, set to a multiple of integer thereof at all times. A ratio of the ON-time to a sum of an ON-time at a certain timing and an OFF-time subsequent thereto, is referred to as a "duty" , and, as shown in FIG. 2, there are previously set a variety of patterns such as a linear characteristic pattern P1 with which to change the duty substantially in parallel with a passage of time, an exponential function pattern P2 with which to change it exponential-function-wise and further a so-called S-shaped pattern P3. The starting pattern setting unit 12 selects and sets an optimal starting pattern each time in consideration of a state of the power supply and a load characteristic as well.

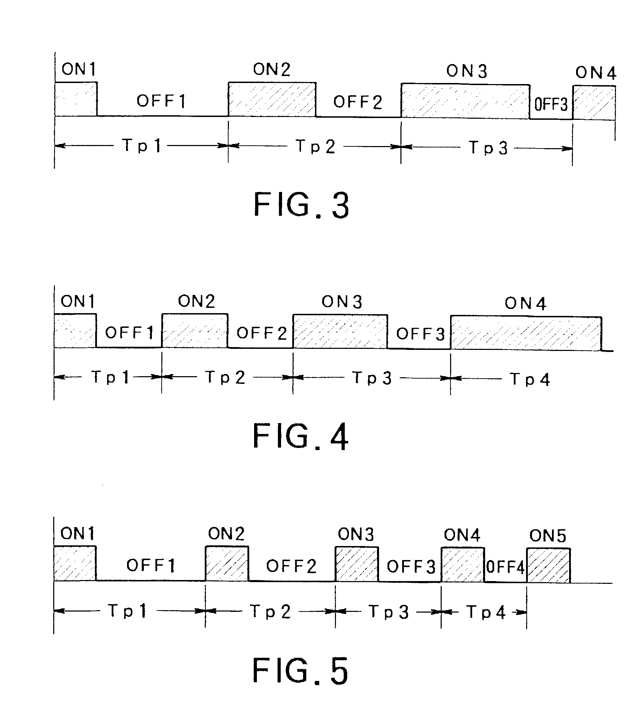

FIG. 3 is a time chart showing the ON/OFF operation of the thyristor unit 4, corresponding to the linear characteristic pattern P1. Herein, a sum Tp of the ON time and the OFF time subsequent thereto when starting the electric motor, is fixed (e.g., approximately 10 - 25 cycles under the commercial AC power supply), wherein first, second, third, ... periods Tp1, Tp2, Tp3, ... have a relationship such as Tp1 = Tp2 = Tp3 =..., and ON times ON1, ON2, ON3, ... gradually proportionally increase as the time elapses. Namely, the relationship therebetween is ON1 < ON2 < ON3 < ... Accordingly, the duties in the respective periods are ON1/Tp1 < ON2/Tp2 < ON3/Tp3 < ..., and gradually increase with the elapse of time. Initial values and increase widths of each individual period and of the ON time are determined taking a relationship with the starting time Ts into consideration. In this case, the OFF times OFF1, OFF2, OFF3, ... are OFF1 > OFF2 > OFF3 > ... reversely to the case of the ON times. It should be noted that the figures are shown conception-wise but may not necessarily properly be shown in mathematics. When an individual period value calculated based on the starting time and on the starting pattern becomes less than a half-cycle, the figure is rounded off on the half-cycle unit such as the half-adjusting method. In short, it may suffice to roughly meet the starting pattern shown in FIG. 2.

Referring to FIG. 4, it must be absolutely the same as the case in FIG. 3 that the duty in each period gradually increases with the passage of time such as ON1/Tp1 < ON2/Tp2 < ON3/Tp3 < ... However, when the periods change such as Tp1 < Tp2 < Tp3 <..., the relationship between the ON times becomes ON1 < ON2 < ON3..., and the relationship between the OFF times is OFF1 = OFF2 = OFF3 = ... In this case also, the initial values and the increase widths of the ON time and of the OFF time are determined considering the relationship with the starting time Ts. The starting pattern in this case is approximate to the starting pattern P2 in FIG. 2.

Referring to FIG. 5, it is the same as the case shown in FIG. 3 or 4 that the duty in each period gradually increases with the elapse of time such as ON1/Tp1 < ON2/Tp2 < ON3/Tp3 <... The relationship between the ON times is, however, ON1 = ON2 = ON3 = ..., and the relationship between the OFF times is OFF1 > OFF2 > OFF3 >... Hence, the periods resultantly change such as Tp1 > Tp2 > Tp3 > ... This starting pattern is approximate to the starting pattern P3 in FIG. 2.

Next, an operation of the apparatus in FIG. 1 will be described.

When starting the electric motor, to begin with, the electromagnetic contactors 5, 6, 8 are set in the ON-state, and the starting time is set by the starting time setting unit 11. Then, the starting pattern setting unit 12 selects and sets the starting pattern. At this time, the electromagnetic contactor 7 remains OFF. Thereafter, the thyristor control circuit 13 launches into the soft start. The thyristor control circuit 13 controls the ON/OFF processes of the thyristor 4 in order to attain a desired starting characteristic in accordance with the contents of the settings by the starting time setting unit 11 and the starting pattern setting unit 12. The thyristor is ignited when given an ignition signal from the thyristor control circuit 13, and a full voltage thereof is applied from the AC power supply to the AC electric motor 2. The OFF operation of the thyristor is carried out by imparting no ignition signal to the thyristor from the thyristor control circuit 13, and the thyristor is automatically brought into the OFF state at a terminal point (a point of 360 degrees in the case of the negative half-wave and a point of 180 degrees in the case of the positive half-wave) of the half-wave with the ignition signal disappeared. The full voltage is thus applied to the AC electric motor 2. At the initial stage of the starting, however, as shown in FIG. 2, the duty is small, and hence it never happens that the above-described inconvenience occurs with the so-called full voltage starting.

Upon the end of the starting (when the rated velocity is substantially attained) , the electricity is not necessarily supplied to the electric motor 2 via the thyristor unit 4. The thyristor unit 4 may also be kept waiting till the electric motor is started next time by switching ON the electromagnetic contactor 7 for bypassing the thyristor unit 4 while switching OFF the electromagnetic contactors 5, 6 as the necessity may arise.

The AC electric motor 2 is as described above soft-started, thereby making it feasible to relieve adverse influences upon the outside appliance due to the drop of the voltage when the so-called full voltage starting is effected and upon the electric motor and the mechanical load due to the voltage shock as well as making it possible to easily set the starting pattern taking into consideration the load torque and time durable quantities of the electric motor and of the starting apparatus. Besides, according to the present invention, there are not provided a resistance and a reactor for the starting. In addition, the complicated phase control of the thvristor is not executed, and therefore the costs for the equipments can be restrained.

As described above, in one aspect the present invention provides a method whereby an AC electric motor is started by applying a full voltage from an AC power supply to the AC electric motor in a stop state on the unit of a positive or negative half-wave through a repetition of an ON time of a multiple of integer thereof and an OFF time subsequent thereto, and a ratio of the ON time to a sum of the ON time and the OFF time is gradually increased as the time elapses from by a factor of a certain number up to "1" during the starting process.

## Claims

1. A method of starting an AC electric motor, comprising:
a step of starting an AC electric motor by applying a full voltage to said AC electric motor in a stop state on the unit of a positive or negative half-wave through a repetition of an ON time of a multiple of integer thereof and an OFF time subsequent thereto; and
a step of gradually increasing a ratio of the ON time to a sum of the ON time and the OFF time as the time elapses substantially from by a fraction of a certain number up to "1" during the starting process.

2. The method of starting the AC electric motor according to claim 1, wherein the sum of the ON time and the OFF time subsequent thereto is set constant, and the ratio of the ON time to the sum of the ON time and the OFF time is increased substantially proportionally to the time.

3. The method of starting the AC electric motor according to claim 1, wherein the ratio of the ON time to the sum of the ON time and the OFF time per period is changed exponential-function-wise in accordance with the passage of time.

4. The method of starting the AC electric motor according to claim 1, wherein the OFF time per period is set substantially constant, and the ON time is gradually increased with the passage of time.

5. The method of starting the AC electric motor according to claim 1, wherein the ON time per period is set substantially constant, and the OFF time per period is gradually decreased in accordance with the passage of time.

6. An apparatus for starting an AC electric motor 2, comprising:
a thyristor 4 connected in series between an AC power supply and said AC electric motor 2;
starting time setting means 11 for setting a starting time of said AC electric motor;
starting pattern setting means 12 for setting a pattern for a time of an effective applying voltage applied to said AC electric motor when started; and
thyristor control means 13 for starting said AC electric motor 2 by applying a full voltage from said AC power supply to said AC electric motor in a stop state on the unit of a positive or negative half-wave through a repetition of an ON time of a multiple of integer thereof and an OFF time subsequent thereto in accordance with contents of settings by said starting time setting means 11 and said starting pattern setting means 12, and for controlling said thyristor 4 so that a ratio of the ON time to a sum of the ON time and the OFF time as the time elapses substantially from by a fraction of a certain number up to "1" during the starting process.
